# EUROPEAN PATENT SPECIFICATION

(11) **EP 0 725 265 B1**
(45) Date of publication and mention of the grant of the patent: **26.09.2001**
(21) Application number: 96500017.7
(22) Date of filing: 02.02.1996
(51) Int. Cl.: G01M 3/28, F16J 15/34

(54) **Sealing joints analysis bell in pressurized gas containers**
Prüfen von Verbindungsdichtringen im Überdruck-Gascontainer
Analyse de joints de raccord dans des containers à gaz pressurisé

(30) Priority: 06.02.1995 ES 9500329 U
(43) Date of publication of application: 07.08.1996
(73) Proprietor: REPSOL BUTANO, S.A., 28015 Madrid (ES)
(72) Inventor: Méndez Ruttlan, Andrés, E-28100 Madrid (ES); Antunez Jiménez, José, E-28529 Madrid (ES)
(74) Representative: Riera Blanco, Juan Carlos

(56) References cited:
- EP-A- 0 328 288
- US-A- 4 116 478
- US-A- 4 202 410
- PATENT ABSTRACTS OF JAPAN vol. 016, no. 137 (M-1231), 7 April 1992 & JP-A-04 000091 (TOYODA GOSEI CO LTD), 6 January 1992,

## Description

### OBJECT OF THE INVENTION

The object of the present Utility Model is constituted by a SEALING JOINTS ANALYSIS BELL IN PRESSURIZED GAS CONTAINERS, specially applicable to the detection of faults originated as consequence of the use, or for any other reason, in the sealing joints of the oil liquefied gas containers, preferably used in automatic control machines for this type of joints.

### BACKGROUND OF THE INVENTION

The analysis bell which is going to be the object of the description represents a very important novelty in reference to the present state of the art, producing essential novelty characteristics and outstanding advantages on the means used at present for the same purpose.

It is well known the existence of oil liquefied gas containers, of a sealing joint located in the outside around the neck of the gas outlet valve, in the proximity of the nozzle of the valve body, this joint works hermetically sealing the coupling between the regulator for domestic use and the body of the valve, in such a way that both elements establish a sealing condition which avoids the possibility of gas unwanted leaks to the outside.

Up to now, the testing of such joints was visually carried out, in such a way that the operator, located in a given position of the filling line, was able to verify the state of such joint, and when a faulty joint of a container was found, the container was taken out to substitute the faulty joint by a new one.

This method is by no means free of errors, since it definitively depends on the response capacity of the operator in charge of carrying out such function.

A method for hydrostatically testing connections between segments of pipe, applying pressurised hydrostatic test fluid to the connection, is also known from the document EP-0-328-288. Selective application of hydrostatic pressure manipulates the bearing pressure and controls the sealing capacity of the connection during hydrostatic leak testing.

The invention has developed an analysis bell, for its use in sealing joint testing automatic machine, supposing an important advance in reference to the methods used at present, bringing forward a testing means with capacity to establish some working conditions which reproduce the same conditions of domestic use, informing the machine from which it depends, the results of the analysis carried out, all of it without requiring the intervention of any hand labour.

### DESCRIPTION OF THE INVENTION

The analysis bell suggested by the present invention is constructed starting from an external body generally cylindrical, inside of which a cavity has been made which nozzle is conical to facilitate the coupling of the bell to the gas container valve. In such cavity and in a predetermined height, there is an analysis chamber which in general has the form of a circular crown and which upper wall determines a seat that is responsible of establishing the sealing with the joint to be tested. Over this sealing seat the cavity has cylindrical shape, that when adapting itself to the conical shape of the container valve, it forms a pressure chamber which is really in charge of receiving the pressurized fluid by which the sealing conditions are tested. Furthermore, it has been foreseen some through openings in the upper wall of the bell by which such pressure chamber is fed through the external ducts which may be considered as appropriate.

### BRIEF DESCRIPTION OF THE DRAWINGS

In the drawing accompanying the present description it has been shown, as an example, and therefore without a limiting character, a preferred embodiment of the object of the invention. In such drawings:
- Figure 1: shows a frontal elevation view, partially cut, of an analysis bell suggested by the invention.
- Figure 2: shows, in section, a detail of the coupling between the analysis chamber of the invention and a valve of a gas container of domestic use.

### PREFERRED EMBODIMENT OF THE INVENTION

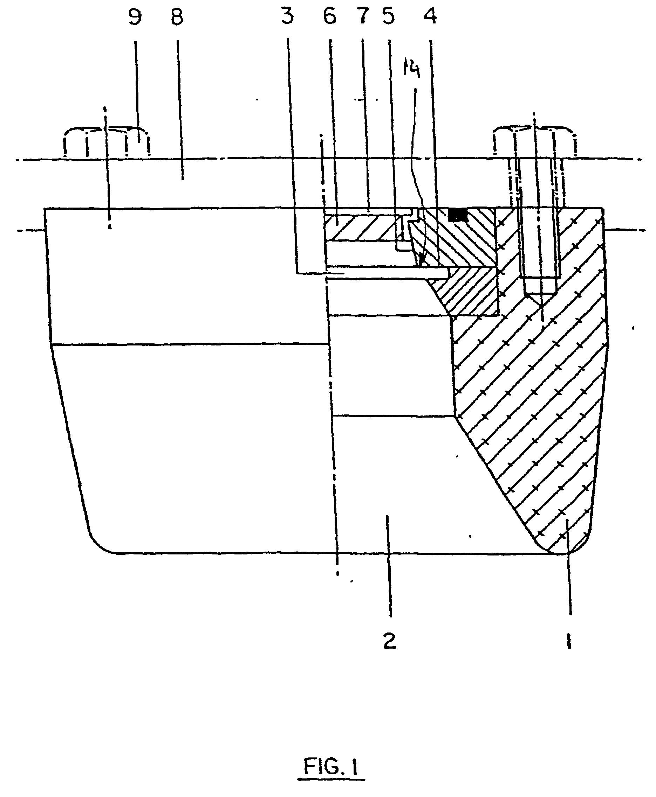

As it is shown in Figure 1 of the drawings, the analysis bell developed by the invention is formed by an external body (1) generally cylindrical, constructed in an appropriate material, which has an interior axial hole in order to define an internal cavity (2) which adopts in its nozzle a conical shape to facilitate the introduction and guidance of the valve which joint is going to be tested. The mentioned internal cavity (2) has a shape that, in general, reproduces a regulator of domestic use, with the purpose of establishing the same coupling and sealing conditions.

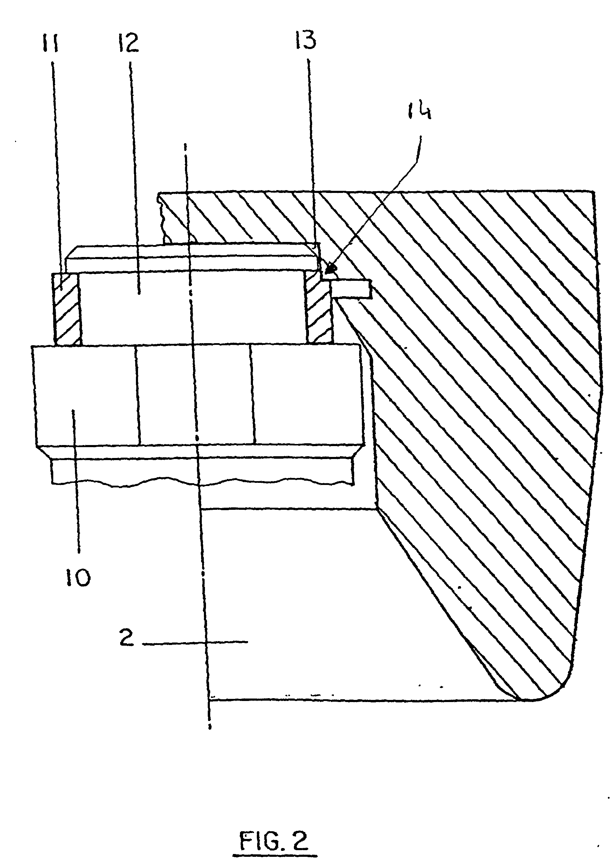

In the upper part of the internal cavity (2) it has been made an analysis chamber (3) that takes the form of a circular crown of limited height, defining the upper wall (4) of this analysis chamber a sealing seat whose mission will be described in reference to Figure 2.

Above the mentioned analysis chamber (3) there is an area (5) of cylindrical general shape closed in the upper part by a wall (6) in which some through openings have been made (7).

The analysis bell of the invention, after its fixation to the corresponding machine, will be submitted to a lowering/rising movement, by which a support (8) will be held, for example by means of screws (9) being this support (8) in charge of dragging in its movement such analysis bell.

It has been shown in Figure 2 of the drawings a detailed of the coupling between the analysis bell of the invention and a valve (10) of a pressurized gas container. In this Figure it also appears a sealing joint (11) in its position, placed around the neck (12) of the valve (10).

Looking at this Figure 2, any expert in the subject may perfectly deduce the way in which the analysis bell of the invention works. For this reason, when in the automatic testing machine any container reaches the position of the bell, the machine acts on the support means (8) determining the lowering movement of the bell to receive in its internal cavity (2) the valve (10) of such container. The conical nozzle of the internal cavity (2) will initially guide such valve (10) in order to reach the testing position of the joint which is shown in the mentioned Figure 2.

Once the valve (10) has been correctly located in the inside of the cavity (2), the seat (4) defined by the upper wall of the analysis chamber (3) will be positioned against the upper edge of the sealing joint (11), in such a way that surrounding the valve nozzle (10) a pressurized chamber (13) is defined, limited by the seat of the wall (4) on the sealing joint (11), the free section of such joint (11), the cylindrical area (5), the internal surface of the upper wall (6) and the valve (10) nozzle itself. In these conditions, the machine is ready to supply pressure to the mentioned pressure chamber (13) through the openings (7) during a predetermined period of time, such machine carrying out the proper testing to verify if there is or not any drop in the value of the supplied pressure.

In case the sealing joint (11) is faulty or simply the valve (10) is devoid of such joint (11), in the pressure chamber (13) the required sealing conditions cannot be obtained, being this situation properly detected by the machine. Likewise, if the nozzle of the valve (10) has any defect which hampers or makes difficult the insertion and correct coupling of the domestic regulator or if the foreseen sealing conditions cannot be established, either because such nozzle does not reach the definite positioning in the cavity (2) or by any other reason, the machine will detect this faulty sealing with the relevant pressure drop. In both cases, after the withdrawal of the analysis chamber through the corresponding rising movement thereof, the container will be sent by the machine in a foreseen direction of the faulty containers, with the purpose of carrying out their checking and the correction of the fault.

If, on the contrary, in the pressure chamber (13) the foreseen value for the supplied pressure is reached, for a given period of time, the machine will identify that both the sealing joint (11) as well as the valve itself (10) are in perfect using conditions, by which the analysis bell will be withdrawn from this testing position and the machine will send the tested container in the direction of containers in proper conditions.

It is not considered as necessary to make more extensive the description of the invention so that an expert in the art may develop and carry out the embodiment thereof.

In any case, the object proposed by the invention will be submitted to changes in size or materials used in its construction, without supposing any alterations of the essential characteristics of such invention, within the scope of the appended claims.

## Claims

1. SEALING JOINTS ANALYSIS BELL IN PRESSURIZED GAS CONTAINERS, specially of oil liquefied gases, applicable to the detection of faults in sealing joints of such container valves when a domestic regulator is coupled.to said joints, for its use in automatic testing machines, wherein the bell is constituted by a body (1) of cylindrical general shape, in which it has been made an inner axial hole to define an internal cavity (2) which receives the valve (10) carrier of the joint (11) to be tested suitably arranged around the neck of the valve, this internal cavity (2) having an initial portion conically shaped to facilitate the automatic introduction of such valve (10) and guide it up to the testing position, and having an analysis chamber (3) made in the upper part of the internal cavity that has the form of a circular crown with limited hight, the upper wall (4) of which defines by its internal edge a sealing seat (14), and existing above the analysis chamber (3) a cylindrical area (5) which is closed in the upper part by a wall (6) in which a plurality of through openings (7) have been made.

2. Sealing joints analysis bell in pressurized gas containers according to claim 1, wherein a defined pressure chamber has been foreseen between the sealing seat (14) of the upper wall (4) of the analysis chamber (3), the upper cylindrical area (5) and the internal surface of the upper wall (6), destined to receive the testing pressure when applied through the openings (7) and during a predetermined period of time.

## Patentansprüche

1. Probeglocke für Dichtungsfugen von Gasdruckbehältern, besonders für Flüssiggasderivate des Petroleums, die zur Detektion von Fehlern der Dichtungsfugen der besagten Ventile des Behälters eingesetzt werden kann, da an den fraglichen Fugen ein Haushaltsregulierer angebracht wird, der bei Maschinen zur automatischen Untersuchung benutzt werden kann, wobei die Glocke aus einem Körper (1) mit im allgemeinen zylindrischer Form besteht, in dem eine interne axiale Öffnung angebracht ist, durch die ein innerer Hohlraum (2) zur Aufnahme des Trägers des Ventils (10) der Fuge (11) abgegrenzt wird, welche Gegenstand der Probe ist und welche bereits in angemessener Weise am Hals des Ventils angebracht ist, wobei der besagte innere Hohlraum (2) ein anfängliches Teilstück mit konischer Form aufweist, das dazu gedacht ist, die automatische Einführung des besagten Ventils (10) zu erleichtern, um es bis zur Untersuchungsposition zu führen, eine Probekammer (3) über dem oberen Teil des inneren Hohlraumes zur Verfügung steht, die die Form einer kreisförmigen Krone mit beschränkter Höhe aufweist, die durch den inneren Rand ein Dichtungslager (14) abgrenzende obere Wand (4), und wobei über der Probekammer (3) ein zylindrischer Bereich (5) existiert, dessen oberer Teil durch eine Wand (6) abgeschlossen wird, in der eine Menge von durchgehenden Öffnungen (7) angebracht ist.

2. Probeglocke für Dichtungsfugen von Gasdruckbehältern nach Anspruch 1, in der eine durch das Dichtungslager (14) der oberen Wand (4) der Probekammer (3), den oberen zylindrischen Bereich (5) und die innere Oberfläche der oberen Wand (6) abgegrenzte Druckkammer vorgesehen ist, die dazu bestimmt ist, über die Öffnungen (7) über eine vorbestimmte Zeitspanne hinweg den Prüfdruck aufzunehmen.

## Revendications

1. Cloche d'analyse de joints de scellement pour conteneurs de gaz sous pression, en particulier de gaz liquéfiés dérivés du pétrole, applicable à la détection de défauts sur les joints de scellement des vannes des dits conteneurs pouvant apparaître suite à l'accouplement d'un régulateur domestique sur les joints en question, utilisable sur les machines de test automatiques, la cloche étant constituée d'un corps (1) de forme généralement cylindrique sur lequel a été pratiqué un orifice axial interne définissant une cavité interne (2) destinée à recevoir le support de vanne (10) du joint (11) objet du test et qui est disposée de manière adéquate autour du cou de la vanne, ladite cavité interne (2) ayant une partie initiale en forme de cône destinée à faciliter l'introduction automatique de ladite vanne (10) pour la guider jusqu'à la position de test et disposant sur sa partie supérieure d'une chambre d'analyse (3) en forme de couronne circulaire de hauteur limitée, la paroi supérieure (4) de laquelle définit un siège de scellement (14) au travers de son bord interne, et ladite chambre d'analyse (3) étant pourvue d'une zone cylindrique (5) dont la partie supérieure est fermée par une paroi (6) sur laquelle ont été réalisées plusieurs ouvertures passantes (7).

2. Cloche d'analyse de joints de scellement pour conteneurs de gaz sous pression, selon la revendication 1, sur laquelle a été prévue une chambre sous pression définie entre le siège scellant (14) de la paroi supérieure (4) de la chambre d'analyse (3), la zone cylindrique supérieure (5) et la surface interne de la paroi supérieure (6), destinée à recevoir la pression de test appliquée via les ouvertures (7) pendant une période de temps prédéterminée.
